**Europäisches Patentamt**

**European Patent Office**

**Office européen des brevets**

(11) Numéro de publication: **0 194 920**
**B1**

# FASCICULE DE BREVET EUROPÉEN

(45) Date de publication du fascicule du brevet:
21.06.89

(51) Int. Cl.⁴: **H 04 L 1/00**

(21) Numéro de dépôt: **86400431.2**

(22) Date de dépôt: **28.02.86**

(54) Procédé de transmission de données autoadaptatif et hybride, notamment pour la télécommunication spatiale, et appareils de mise en oeuvre d'un tel procédé.

(30) Priorité: **05.03.85 FR 8503215**

(43) Date de publication de la demande:
**17.09.86 Bulletin 86/38**

(45) Mention de la délivrance du brevet:
**21.06.89 Bulletin 89/25**

(84) Etats contractants désignés:
**DE GB IT SE**

(56) Documents cité:
**F.F. FURRER: "Fehlerkorrigierende block-codierung für die datenübertragung", 1981, pages 251-271, Chapitre 7: "Anwendung der Block-Codierung", Birkhäuser verlag, Stuttgart, DE
THE RADIO AND ELECTRONIC ENGINEER, vol. 42, no. 12, décembre 1972, pages 523-530, Londres, GB; U. HALLER et al.: "A forward error correction system for heavily disturbed data transmission channels"
ELECTRONICS AND COMMUNICATIONS IN JAPAN, vol. 66-A, no. 9, 1983, pages 28-35, Silver Spring, Maryland, US; H. IMAI et al.: "Decoding method for doubly encoded reed-solomon codes and their error probabilities"
PROCEEDINGS OF THE NATIONAL ELECTRONICS CONFERENCE, vol. 29, no. 29, octobre 1974, pages 191-193, New York, US; G.I. DAVIDA: "Hybrid techniques in error correction"**

(73) Titulaire: **AGENCE SPATIALE EUROPEENNE, 8-10, rue Mario Nikis, F-75738 Paris Cedex 15 (FR)**

(72) Inventeur: **Rogard, Roger, Verdistraat 16, Lisse (NL)**

(74) Mandataire: **Rodhain, Claude, Cabinet Claude Rodhain 30, rue la Boétie, F-75006 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

L'invention se rapporte à un système de télécommunication, notamment destiné à la liaison entre un satellite et des terminaux terrestres mobiles. Elle concerne plus particulièrement un procédé de transmission de données permettant la détection et la correction des erreurs intervenues au cours de la transmission, et comprenant un nouveau principe de "retransmission automatique à la demande" (en anglais ARQ: Automatic Retransmission reQuest).

L'objectif essentiel des procédés de transmission de données du type de celui de l'invention est de transformer et de coder un message d'information en un autre message moins vulnérable aux erreurs de transmission, et équivalent au message initial. De manière connue, cette objectif est atteint en utilisant un codage redondant, qui permette de reconstituer le message initial à partir d'une réception partielle, ou entachée d'erreurs, du message codé.

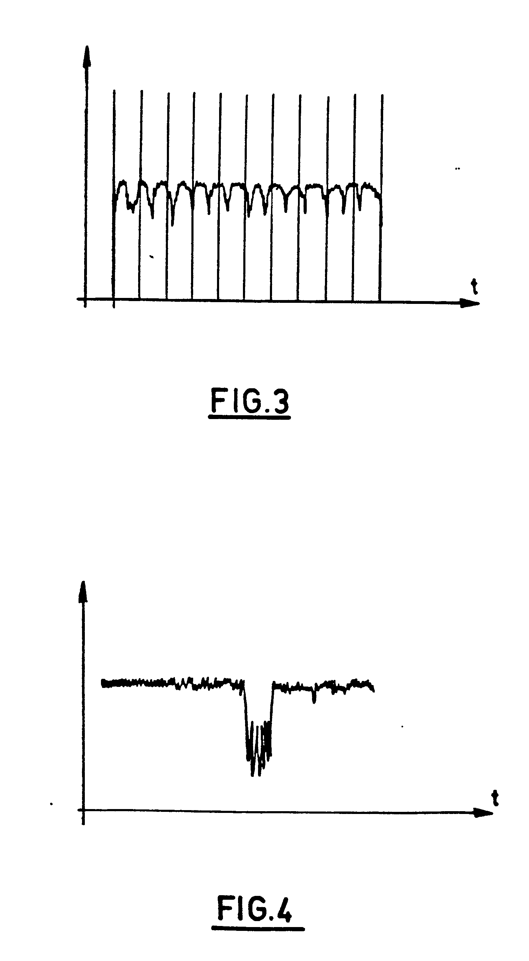

Dans le cas d'une liaison satellite-terminal terrestre, pour laquelle est plus particulièrement conçue l'invention, la transmission des données est fréquemment affectée par des périodes d'évanouissement, voire même d'interruption complète de la communication (black-out). Les figures 3 et 4 des dessins annexés, reproduisant le signal affiché par l'écran cathodique d'un analyseur de spectre, montrent des exemples typiques de ces perturbations: le signal de la figure 3 correspond à un évanouissement périodique produit par des arbres régulièrement espacés le long d'une route suivie par un véhicule récepteur; la figure 4 correspond à l'évanouissement temporaire provoqué par le passage sous un pont enjambant une autoroute.

Cependant, la plupart du temps la liaison est bonne, par exemple lorsque le véhicule se trouve sur des routes principales dans la campagne. En ce cas, la liaison est identique à une voie à bruit blanc de Gauss.

L'invention a pour but de fournir un procédé de transmission de données entre satellites et terminaux mobiles, qui permette un rendement de transmission élevée, en limitant les risques de production d'ambiguïtés de procédure lors de conditions de propagation mauvaises.

Les systèmes de transmission connus dans l'art antérieur, et qui sont capables de résoudre les problèmes dûs aux mauvaises conditions de propagation, sont du type ARQ hybride, c'est-à-dire qu'ils sont basés sur la retransmission automatique sur demande, quand des données ont été perdues. On se réfère à ces systèmes en parlant de Demandes de Retransmission Automatique, ou ARQ en anglais, expression issue du symbole RQ de la demande de répétition du système télégraphique breveté en 1943. Le système de transmission est dit hybride lorsqu'il utilise parallèlement un procédé de correction d'erreurs.

Plusieurs procédures de transmission sont connues pour les systèmes ARQ:

- Arrêt et attente (Stop and Wait) est la plus simple des procédures. Les blocs de données sont transmis un à un après la transmission d'un bloc, le terminal émetteur n'émet plus jusqu'à l'arrivée de l'accusé de réception du terminal récepteur. Si l'accusé est positif (ACK) le bloc de données suivant est transmis et une copie est stockée dans une mémoire tampon. Si l'accusé est négatif (NACK), le même bloc est retransmis à partir de la mémoire tampon.

- Retour-N (Go-back-N): l'émetteur transmet des blocs de données continuellement jusqu'au moment où un accusé négatif (NACK) est reçu du récepteur. L'émetteur reprend la transmission des N derniers blocs.

- ARQ sélectif (Selective repeat ARQ): l'émetteur transmet continuellement et le récepteur demande seulement la retransmission des blocs mal reçus.

Ces procédures peuvent être combinées avec des techniques de correction d'erreurs.

Les critères d'évaluation des performances de chacun des systèmes ARQ mentionnés ci-dessus, sont principalement le rendement du système, défini comme étant le rapport entre le nombre de symboles d'information pure du message reçu, et le nombre total des symboles effectivement transmis (comprenant l'addition des symboles d'information et des symboles de contrôle), ainsi que la durée de propagation dans le canal de transmission. Ce dernier paramètre est particulièrement important dans le cas des télécommunications par satellites.

Or, aucune des procédures connues n'est réellement optimale au vu de ces deux critères.

En outre, les systèmes connus supposent l'existence d'une voie de retour de bonne qualité, pour la transmission des signaux d'accusé de réception, et de demande de retransmission émis par le récepteur. Or, dans le cas où la voie aller est mauvaise, c'est-à-dire quand un système ARQ est vraiment utile, il s'avère que la voie de retour est généralement aussi mauvaise, et que donc la probabilité de perdre un message "d'accusé de réception" est grande.

Quant aux techniques de codage connues, utilisées pour des transmissions de données perturbées par des évanouissements de longues durées qui provoquent des rafales d'erreurs, elles comprennent généralement des techniques d'entrelacement ces techniques permettent de diminuer ou supprimer la corrélation entre les erreurs qui affectent les symboles successifs appliqués à un décodeur, notamment en transmettant les différents composants d'un bloc dans un ordre différent de celui que le décodeur va recevoir. Or, ces techniques d'entrelacement ont pour inconvénient d'augmenter encore la durée de propagation.

En conséquence, la présente invention se propose de remédier aux inconvénients de l'art antérieur mentionnés ci-dessus, et plus particulièrement aux inconvénients apparaissant lors de leur utilisation en télécommunication par satellite.

Ainsi, un premier objet de l'invention consiste à améliorer le rendement des systèmes de transmission, alors que le rendement de la meilleure procédure, à savoir l'ARQ sélectif est mauvais à cause des durées de propagation importantes, notamment en cas de nécessité de retransmission.

Un autre objet de l'invention est d'obtenir un procédé de transmission flexible et adaptatif, permettant de réduire simultanément la procédure et l'effort de codage lorsque la voie de transmission est bonne.

Un autre objet de l'invention consiste à limiter l'information à transmettre sur la voie de retour, et à simplifier l'ordonnancement dans le temps des procédures.

Un objet supplémentaire de l'invention consiste à réduire le délai de transmission, jusqu'à présent assez élevé dans les procédures connues, particulièrement dans le cas où on utilise l'entrelacement.

Un autre objet de l'invention consiste à limiter l'ambiguïté des protocoles lorsque la voie de retour est également mauvaise.

En conséquence, l'invention concerne un procédé de transmission de données autoadaptatif et hybride, notamment pour un système de télécommunications entre un satellite et des terminaux terrestres mobiles, du type comportant d'une part le codage de détection et de correction des erreurs de chaque message transmis, et d'autre part l'émission continuelle de blocs de données, y compris des blocs à retransmettre lorsque la correction des erreurs détectées dans ces blocs est impossible, ces blocs étant considérés effacés.

Les données transmises sont regroupées par jeux de blocs de données comportant chacun des blocs redondants de contrôle, et l'émission du jeu de blocs de données en cours de transmission est interrompue lorsqu'a été reçu un nombre de blocs non effacés suffisant pour permettre le décodage du message transmis, l'émission reprenant avec le jeu de blocs suivants sans la retransmission des blocs effacés.

Selon une caractéristique préférentielle de l'invention, chaque bloc de données est lui même composé de symboles d'information et de symboles de contrôle, et le codage de détection et de correction d'erreurs de chaque jeu de blocs de données en cours de transmission est réalisé à partir d'un code de Reed-Solomon utilisé dans un mode bidimensionnel, un premier codage étant appliqué à la correction des erreurs aléatoires à l'intérieur de chaque bloc de données transmis, et le second codage permettant la correction des effacements de blocs dans chaque jeu transmis au moyen desdits blocs redondants de contrôle.

De manière avantageuse, la procédure d'interruption de l'émission du jeu de blocs de données en cours de transmission est réalisée par l'émission répétée d'un simple signal d'accusé de réception par la station réceptrice.

D'autres caractéristiques et avantages de l'invention apparaîtront à la lecture de la description suivante et des dessins annexés dans lesquels:

- la Fig. 1 représente la structure d'un jeu de blocs de données tel que transmis au moyen du procédé de transmission de données selon l'invention;
- la Fig. 2 représente la séquence de transmission d'un jeu de blocs de données selon la procédure de transmission du procédé selon l'invention;
- les Figs 3 et 4 représentent, comme mentionné en préambule, des illustrations typiques de perturbations affectant la transmission des données lorsque la station réceptrice est montée dans un véhicule automobile en mouvement.

Le procédé de transmssion de données selon l'invention est donc construit sur une procédure ARQ autoadaptative que l'on appellera STARQ, puisque la seule information d'accusé de réception transmise par le récepteur est "STOP TRASMIT" (ou encore "ST"), ce qui signifie qu'on a reçu assez d'informations pour que le décodage du message soit possible, et que l'émetteur peut maintenant transmettre le jeu d'information suivant.

Comme indiqué précédemment, la mise en oeuvre de l'invention est basée sur l'utilisation préférentielle des techniques de codage du type de Reed-Solomon, dans un mode bidimentionnel. Afin d'expliquer l'ensemble du procédé de transmission, on rappellera dans un premier temps les caractéristiques des codes de Reed-Solomon, puis on expliquera le schéma de codage bidimensionnel avant de terminer par une illustration du fonctionnement d'une transmission selon le procédé de l'invention.

Les codes de Reed-Solomon sont des codes B.C.H. (Bose-Chaudhuri-Hocquenghem), c'est-à-dire des codes cycliques linéaires en blocs, les codes de Reed-Solomon présentant la particularité d'être non binaires, c'est-à-dire d'admettre des symboles appartenant à un alphabet à q éléments, q étant un nombre entier ou une puissance d'un nombre entier.

Les cractéristiques fondamentales de ces codes de Reed-Solomon sont les suivantes:
- les blocs de données ont une longueur de N symboles, chaque symbole étant un élément d'un corps de Galois CG (q).

Selon le mode préférentiel de réalisation décrit, on choisit:

$q = 2^n$
$n = 4$
N n'est pas arbitraire:
$N = q - 1 = 2^n - 1 = 15$ symboles

Il est possible d'étendre la longueur du code par un ou deux symboles. Pour notre application, il est intéressant de prendre un nombre pair pour N (N = 6), ce qui correspond à un nombre entier d'octets. On conservera l'extension des codes de Reed-Solomon avec N = 16 pour les exemples donnés plus loin.

- le nombre de symboles d'information présent dans chaque bloc de données est égal à K, qui peut être un nombre quelconque inférieur à N pour satisfaire à la condition de redondance. Les symboles supplémentaires sont des symboles de contrôle, calculés par combinaisons linéaires en fonction des symboles d'information.

- la capacité de détection des erreurs est un nombre inférieur ou égal à (N - K) erreurs, quelle qu'en soit la distribution.

- la capacité de correction d'erreurs est un nombre inférieur ou égal à (N - K)/2 erreurs quelle qu'en soit la distribution.

- la capacité de correction des effacements est identique à la capacité de détection d'erreurs.

Un effacement est un symbole identifié comme étant incorrect, ou déclaré incorrect à priori. Arbitrairement, on considère alors que le symbole "zéro" a été reçu.

A titre d'exemple, un bloc codé caractérisé par le couple (N, K) (16, 12) permet:
* la détection jusqu à 4 erreurs
* la correction de jusqu à 2 erreurs
* la correction de jusqu à 4 effacements.

Pour un couple (N, K) (16, 8), on réalise la correction de jusqu à 8 effacements.

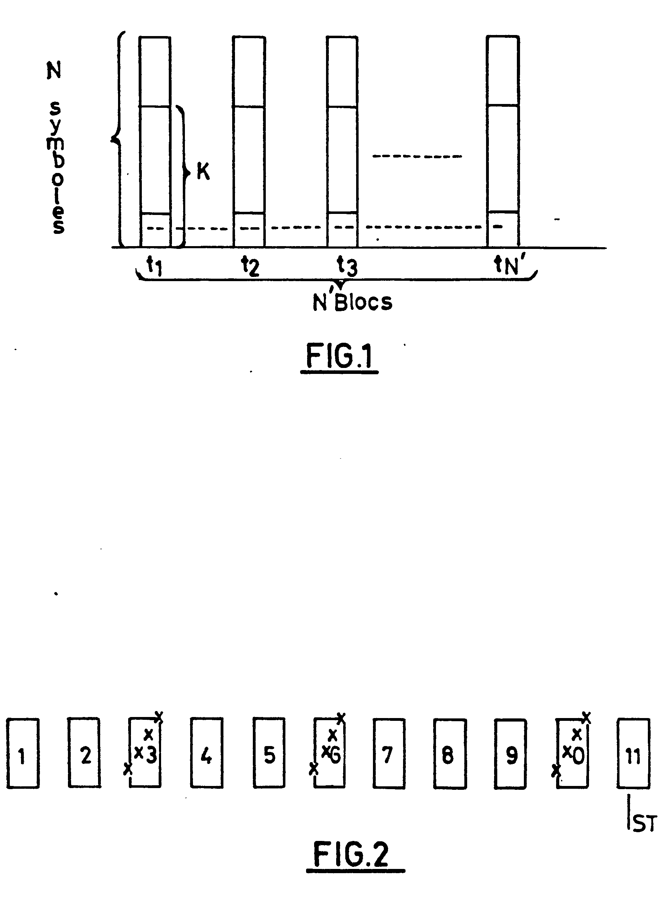

Un exemple de codage bidimentionnel est la technique CRC (Cyclic Redundancy Check) utilisée pour la vérification des informations sur bande magnétique. Cette technique a été adaptée au codage de Reed-Solomon, et un exemple de cette nouvelle utilisation est illustré par la figure 1.

En figure 1, N' blocs de données contenant N symboles sont représentés par des colonnes verticales, chaque bloc ayant été reçu à un moment $t_{N'}$. L'information contenue dans chaque bloc est de K symboles, et le nombre de blocs utiles est K'. Le nombre total de symboles d'information utiles est donc de K x K'.

L'information contenue dans chaque bloc a été codée en utilisant le codage de Reed-Solomon pour la correction des erreurs aléatoires.

Un autre codage de Reed-Solomon a été utilisé dans la direction horizontale, pour la correction des erreurs de rafale en utilisant la capacité de correction des effacements de ce code.

Si le temps de transmission d'un bloc est court par rapport à la largeur de bande de l'évanouissement, l'évanouissement correspondra à l'effacement d'un bloc complet. Il est donc nécessaire d'avoir l'information instantanée concernant l'état de la voie de transmission, pour détecter ce type de situation dans laquelle la capacité de détection d'erreurs du code lui-même est dépassée.

On a donc deux cas d'effacement de blocs correspondant soit à un mauvais état de la voie, soit à un bon état de la voie avec impossibilité de corriger les erreurs.

En utilisant ces deux cas comme base, on ne profitera pas de l'avantage complet du codage bidimensionnel. En revanche, le décodage horizontal sera simplifié.

Ce schéma, tout en étant un code bidimensionnel, peut être considéré comme un schéma pour le code horizontal, et par conséquent capable de faire face aux rafales d'erreurs.

On considère maintenant l'adaptation de ce schéma à la procédure STARQ de l'invention.

Dans un système ARQ classique, on demande une retransmission lorsqu'un effacement de blocs a été détecté. La durée de propagation, en particulier dans le cas d'un système de télécommunication par satellite, impose soit la numérotation des blocs, soit une restriction dans la sélection des paramètres de trames. Par ailleurs, la qualité de la voie de retour n'est pas meilleure que celle de la voie directe et il est donc nécessaire d'utiliser la procédure d'accusé de réception avec circonspection, voire même de l'éviter autant que possible, et de l'utiliser de manière sûre.

Le principe de base du schéma selon l'invention est le suivant:
- dans la direction verticale, il n'y a pas de modification par rapport au schéma bidimentionnel.
- dans la direction horizontale (axe du temps) on sélectionne un code de taux 1/2 (ou même plus bas), par exemple dans le cas cité plus haut un code (16, 8), ce qui veut dire que l'on transmet un jeu de 8 blocs d'information, plus des blocs supplémentaires redondants comme désiré. On décode en cette direction en considérant qu'un bloc (code vertical) est soit correct (après avoir appliqué l'algorithme de correction), soit effacé. En utilisant le code sélectionné, il est possible de décoder un vecteur code qui a jusqu'à 8 effacements, ou autrement dit, après la réception avec succès de 8 blocs on aura suffisamment d'informationspour le décodage. Il est donc possible d'envoyer un accusé de réception de ce jeu de blocs d'information, d'arrêter la transmission de toute information codée disponible, et continuer avec le jeu suivant.

Un exemple du procédé est illustré par la Figure 2, qui montre une séquence d'information reçue, numérotée 1 - 11, et dont les blocs 3, 6 et 8 n'ont pas été reçus correctement. Suite à la réception des 8 premiers blocs, 2 ont été déclarés effacés: les blocs 3 et 6. L'accusé de réception n'a été envoyé qu'après réception de 3 blocs supplémentaires, l'un d'eux (n° 10) ayant été déclaré effacé, ce qui conduit à un total de 8 blocs reçus correctement.

Dans un système classique on aurait été obligé de demander la répétition des blocs 3 et 6, par exemple, en utilisant la voie de retour qui n'est pas meilleure que la voie d'aller, c'est-à-dire sans garantie de succès. Selon le schéma proposé par l'invention, l'accusé de réception sera répété plusieurs fois, sans ambiguïté, et dès que cet accusé est reçu par l'émetteur, ce dernier continuera avec la transmission d'un autre jeu d'information. Le seul risque est que l'émetteur transmette un ou deux blocs d'information plus que nécessaire.

De cet exemple, on peut voir par ailleurs comment le schéma utilise avantageusement l'entrelacement, sans introduire des délais de propagation supplémentaires.

Une simulation du fonctionnement du procédé de transmission de données autoadaptatif et hybride selon l'invention a été développée sur un ordinateur HP 9816. Les résultats de cette simulation sont représentés successivement dans les tableaux I à VI.

En table I sont représentés les 96 symboles d'information du jeu de données à transmettre, ces symboles d'information étant répartis en huit blocs successifs de douze symboles chacun.

Le tableau II représente le jeu de données, après qu'il ait subi l'opération de codage bidimensionnel. Ce codage est réalisé d'une part en complétant chacun des huit blocs d'origine par quatre symboles de contrôle chacun, alignés verticalement à la suite des douze symboles d'information. On a donc pour ce codage "vertical" un code (N, K) (16, 12), qui permet, comme on l'a mentionné ci-dessus, de détecter jusqu' à 4 erreurs et d'en corriger jusqu' à deux.

La seconde partie du codage consiste à construire huit blocs de contrôle, alignés horizontalement aux huit blocs d'information ayant subis le codage vertical. Ce codage "horizontal" se caractérise donc par un couple (N, K) (16, 8), et permet la correction de jusqu à huit effacements de blocs.

La table III représente la table des erreurs, telle qu'elle a été choisie pour tester les différentes capacités de correction du procédé de transmission de données selon l'invention. On note que le premier bloc se verra entaché de deux erreurs, et que le second et le troisième blocs de données auront chacun quatre erreurs.

La table IV représente le jeu de données tel qu'il sera reçu, sans avoir encore subi aucune opération de décodage. Toutefois, la procédure STARQ va permettre, par sa faculté d'autoadaptation, de ne transmettre de ce jeu complet de données codées que le nombre de blocs strictement nécessaire pour retrouver le message initial.

En conséquence, et comme indiqué en table V, le décodage "vertical" permet de constater que, tout d'abord, le bloc 1 n'est pas effacé, puisque deux erreurs y ont été détectées (voir la matrice d'erreurs de la table III), ce qui reste à l'intérieur de la capacité de correction du codage vertical caractérisé par le couple (N, K) (16, 12). En revanche, les blocs 2 et 3 sont entachés chacun de quatre erreurs, qui sont effectivement détectées, mais ne peuvent être corrigées puisqu'elles dépassent la capacité de correction du codage vertical. Les blocs 2, 3 sont donc considérés comme étant effacés. En conséquence, il sera nécessaire de recevoir deux blocs de contrôle supplémentaires, en plus des huit blocs d'information d'origine, pour compenser l'effacement des blocs 2 et 3. Puisqu'aucun des blocs 4 à 10 n'est effacé, le récepteur peut transmettre après réception du dixième bloc, un signal d'accusé de réception qui interrompt l'émission du jeu de données. Il n'a donc pas été nécessaire, dans ce cas, de transmettre tous les blocs de contrôle. Il est clair que la procédure permet ainsi un gain de temps de transmission, particulièrement appréciable dans le cas d'une liaison par satellite.

La table VI représente enfin le jeu de données d'information stricte tel qu'il a été restitué après l'opération finale de décodage "horizontal". Ce décodage a permis de retrouver la valeur de chacun des symboles d'information des blocs 2 et 3, à partir des huit blocs non effacés reçus, en appliquant l'algorithme de correction d'erreurs de Reed-Solomon utilisé.

A cet égard, l'algorithme de base, qui est pratiquement identique pour les dimensions verticale et horizontale, est capable de décoder jusqu' à 500 bits/sec. en temps réel. L'optimisation de l'algorithme en utilisant des techniques de transformation rapide de Fourier (FFT) peut encore accélérer le traitement par un facteur de deux ou trois, et l'utilisation d'un langage de simulation plus performant que le langage PASCAL conduira à un gain d'au moins un facteur 4. Il en résulte que la mise en oeuvre réelle du procédé de transmission de données selon l'invention ne nécessitera aucun dispositif spécial pour un taux d'information de jusqu'à environ 2,4 k bits/sec.

De manière préférentieller le taux du code "horizontal" permettant l'élaboration et le déocodage des blocs redondants de contrôle pour la correction des effacements de blocs dans chaque jeu transmis est au plus égal à 1/2, afin d'autoriser, comme un cas limite, l'effacement des huit blocs de données d'origine lors d'une très mauvaise transmission.

La procédure d'interruption de l'émission du jeu transmis, lorsqu'a été reçu un nombre de blocs non effacés suffisant pour permettre le décodage du message transmis, est réalisé par l'émission d'un simple signal d'accusé de réception par la station réceptrice. De manière avantageuse, le signal d'accusé de réception est répété plusieurs fois, jusqu'à interruption effective de l'émission du jeu transmis.

Le système selon l'invention est particulièrement destiné à équiper un système de transmission de données, dans le cadre du programme PROSAT, pour des terminaux maritimes, aéronautiques, ou mobiles terrestres.

## Revendications

1. Procédé de transmission de données autoadaptatif et hybride, notamment pour un système de télécommunication entre un satellite et des terminaux terrestres mobiles, du type comportant d'une part, le codage de détection et de correction des erreurs de chaque message transmis, et d'autre part l'émission continuelle de blocs de données, y compris des blocs à retransmettre lorsque la correction des erreurs détectées dans ces blocs est impossible, ces blocs étant considérés effacés, caractérisé en ce que les données transmises sont regroupées par jeux de blocs de données comportant chacun des blocs redondants de contrôle,

et en ce que l'émission du jeu de blocs de données en cours de transmission est interrompue lorsqu'a été reçu un nombre de blocs non effacés suffisant pour permettre le décodage du message transmis, l'émission reprenant avec le jeu de blocs suivants sans la retransmission des blocs effacés.

2. Procédé de transmission de données selon la revendication 1, caractérisé en ce que le codage de détection et de correction d'erreurs de chaque jeu de blocs de données transmis est réalisée à partir d'un code de Reed-Solomon utilisé dans un mode bidimensionnel, un premier codage étant consacré à la correction des erreurs aléatoires à l'intérieur de chaque bloc de données transmis, et le second codage permettant la correction des effacements de blocs dans chaque jeu transmis, au moyen desdits blocs redondants de contrôle.

3. Procédé de transmission de données selon la revendication 2, caractérisé en ce que le taux du second codage de Reed-Solomon, permettant la correction des effacements de blocs dans chaque jeu transmis, est au plus égal à 1/2.

4. Procédé de transmission de données selon la revendication 1, caractérisé en ce que l'interruption de l'émission du jeu de données en cours de transmission est réalisée par l'émission d'un simple signal d'accusé de réception par la station réceptrice.

5. Procédé de transmission de données selon la revendication 4, caractérisé en ce que le signal d'accusé de réception est répété plusieurs fois, jusqu'à interruption effective de l'émission du jeu en cours de transmission.

6. Application du procédé de transmission de données selon l'une quelconque des revendications de 1 à 5 à la transmission de données entre un satellite et des terminaux maritimes, aéronautiques ou mobiles-terrestres.

## Patentansprüche

1. Verfahren zur autoadaptiven und hybriden Datenübertragung, insbesondere für ein Nachrichtenübertragungssystem zwischen einem Satelliten und landgestützten mobilen Datenendeinrichtungen, das einerseits eine Fehlererkennungs- und Fehlerkorrekturkodierung für jede übertragene Nachricht und andererseits eine kontinuierliche Ausstrahlung vor Datenblöcken aufweist einschließlich Wiederholungsblöcken für den Fall, daß die Korrektur der erkannten Fehler in diesen Datenblöcken unmöglich ist, wobei diese Datenblöcke als gelöscht betrachtet werden, dadurch gekennzeichnet, daß die übertragenen Daten durch Datenblocksätze neu gruppiert werden, welche jeweils redundante Steuerblöcke aufweisen, daß die Ausstrahlung des in der Übertragung befindlichen Datenblocksatzes unterbrochen wird, wenn eine für die Dekodierung der übertragenen Nachricht ausreichende Anzahl nicht gelöschter Blöcke empfangen wurde, und daß die Ausstrahlung mit dem Satz der nachfolgenden Blöcke fortgesetzt wird, ohne die erneute Übertragung der gelöschten Blöcke.

2. Verfahren zur Datenübertragung nach Anspruch 1, dadurch gekennzeichnet, daß die Fehlererkennungs- und Fehlerkorrekturkodierung jedes übertragenen Datenblocksatzes anhand eines Reed-Solomon-Kodes erfolgt, welcher auf zweidimensionale Art verwendet wird, nämlich zu einer ersten Kodierung, die zur Korrektur von stochastischen Fehlern im Inneren jedes übertragenen Datenblocks vorgesehen ist, und zu einer zweiten Kodierung, die die Korrektur der Blocklöschungen in jedem übertragenen Satz mittels der redundanten Steuerblöcke ermöglicht.

3. Verfahren zur Datenübertragung nach Anspruch 2, dadurch gekennzeichnet, daß der Anteil der zweiten Kodierung von Reed-Solomon, welche die Korrektur der Blocklöschungen in jedem übertragenen Satz ermöglicht, höchstens 1/2 ist.

4. Verfahren zur Datenübertragung nach Anspruch 1, dadurch gekennzeichnet, daß die Unterbrechung der Ausstrahlung des in der Übertragung befindlichen Datensatzes durch die Ausstrahlung eines einfachen Quittungssignals durch die Empfangsstation erfolgt.

5. Verfahren zur Datenübertragung nach Anspruch 4, dadurch gekennzeichnet, daß das Quittungssignal bis zur tatsächlichen Unterbrechung der Ausstrahlung des in der Übertragung befindlichen Satzes mehrmals wiederholt wird.

6. Anwendung des Verfahrens zur Datenübertragung nach einem der Ansprüche 1 bis 5 auf die Datenübertragung zwischen einem Satelliten und seegestützten, luftgestützten oder mobilen landgestützten Datenendeinrichtungen.

## Claims

1. Self-adaptive and hybrid process for the transmission of data, notably for a telecommunication system between a satellite and land-based mobil terminals, a process of the type comprising on the one hand encoding, for the detection and the correction of errors, of each transmitted message and on the other hand the continuous emission of blocks of data, including blocks to be retransmitted when it is impossible to correct the errors detected in these blocks, these blocks being considered as erasad, characterized in that the data transmitted is grouped together by sets of blocks of data, each comprising redundant control blocks,

and in that the emission of the set blocks of data in the process of being transmitted is interrupted when a sufficient number of non-erased blocks have been received to permit the decoding of the transmitted message, the emission resuming with the following set of blocks, without the retransmission of the erased blocks.

2. Process for the transmission of data in accordance with claim 1, characterized in that the encoding, for detection and correction of errors, of each transmitted set of blocks of data, is effected from a Reed-Solomon code used in a two-dimensional mode, a first encoding being devoted to the correction of problematical errors within each transmitted block of data and the second encoding permitting the correction of the block crasings in each transmitted set by means of the said redundant control blocks.

3. Process for the transmission of data, in accordance with claim Z, characterized in that the ratio of the second Reed-Solomon encoding, permitting the correction of the erasinge of blocks in each transmission set, is at the most equal to 1/2.

4. Process for the transmission of data in accordance with claim 1, characterized in that the interruption of the emission of che set of data in the process of being transmitted is effected by the emission of a single acknowledgement of receipt signal by the receiving station.

5. Process for the transmission of data, in accordance with claim 4, characterized in that the acknowledgement of receipt signal is repeated several times until effective interruption of the emission of the set in the process of being transmitted.

6. Application of the process for the transmission of data, in accordance with claims 1 to 5, to the transmission of data between a satellite and maritime and aeronautical terminals or mobile land-based terminals.

## TABLE I

### MESSAGE A TRANSMETTRE

| 1 | 2 | 3 | 4 | 5 | 6 | 7 | 8 |
|---|---|---|---|---|---|---|---|
| 2 | 2 | 2 | 2 | 2 | 2 | 2 | 2 |
| 3 | 3 | 3 | 3 | 3 | 3 | 3 | 3 |
| 4 | 4 | 4 | 4 | 4 | 4 | 4 | 4 |
| 5 | 5 | 5 | 5 | 5 | 5 | 5 | 5 |
| 6 | 6 | 6 | 6 | 6 | 6 | 6 | 6 |
| 7 | 7 | 7 | 7 | 7 | 7 | 7 | 7 |
| 8 | 8 | 8 | 8 | 8 | 8 | 8 | 8 |
| 9 | 9 | 9 | 9 | 9 | 9 | 9 | 9 |
| 1 | 1 | 1 | 1 | 1 | 1 | 1 | 1 |
| 2 | 2 | 2 | 2 | 2 | 2 | 2 | 2 |
| 3 | 3 | 3 | 3 | 3 | 3 | 3 | 3 |

## TABLE II

### MESSAGE APRES CODAGE BIDIMENSIONNEL

| 1 | 2 | 3 | 4 | 5 | 6 | 7 | 8 | 14 | 5 | 3 | 15 | 2 | 15 | 4 | 6 |
|---|---|---|---|---|---|---|---|----|---|---|----|---|----|---|---|
| 2 | 2 | 2 | 2 | 2 | 2 | 2 | 2 | 2 | 2 | 2 | 2 | 2 | 2 | 2 | 0 |
| 3 | 3 | 3 | 3 | 3 | 3 | 3 | 3 | 3 | 3 | 3 | 3 | 3 | 3 | 3 | 0 |
| 4 | 4 | 4 | 4 | 4 | 4 | 4 | 4 | 4 | 4 | 4 | 4 | 4 | 4 | 4 | 0 |
| 5 | 5 | 5 | 5 | 5 | 5 | 5 | 5 | 5 | 5 | 5 | 5 | 5 | 5 | 5 | 0 |
| 6 | 6 | 6 | 6 | 6 | 6 | 6 | 6 | 6 | 6 | 6 | 6 | 6 | 6 | 6 | 0 |
| 7 | 7 | 7 | 7 | 7 | 7 | 7 | 7 | 7 | 7 | 7 | 7 | 7 | 7 | 7 | 0 |
| 8 | 8 | 8 | 8 | 8 | 8 | 8 | 8 | 8 | 8 | 8 | 8 | 8 | 8 | 8 | 0 |
| 9 | 9 | 9 | 9 | 9 | 9 | 9 | 9 | 9 | 9 | 9 | 9 | 9 | 9 | 9 | 0 |
| 1 | 1 | 1 | 1 | 1 | 1 | 1 | 1 | 1 | 1 | 1 | 1 | 1 | 1 | 1 | 0 |
| 2 | 2 | 2 | 2 | 2 | 2 | 2 | 2 | 2 | 2 | 2 | 2 | 2 | 2 | 2 | 0 |
| 3 | 3 | 3 | 3 | 3 | 3 | 3 | 3 | 3 | 3 | 3 | 3 | 3 | 3 | 3 | C |
| 13 | 2 | 8 | 10 | 4 | 7 | 3 | 11 | 12 | 4 | 8 | 0 | 2 | 0 | 10 | 15 |
| 10 | 0 | 11 | 15 | 6 | 8 | 2 | 5 | 3 | 6 | 11 | 13 | 0 | 13 | 15 | 11 |
| 1 | 13 | 0 | 14 | 3 | 9 | 11 | 5 | 7 | 3 | 0 | 6 | 13 | 6 | 14 | 13 |
| 4 | 6 | 15 | 3 | 14 | 7 | 12 | 10 | 9 | 14 | 15 | 13 | 6 | 13 | 3 | 13 |

## TABLE III

### TABLE DES ERREURS

| | | | | | | | | | | | | | | | |
|---|---|---|---|---|---|---|---|---|---|---|---|---|---|---|---|
| 13 | 13 | 13 | O | O | O | O | O | O | O | O | O | O | O | O | O |
| 13 | 13 | O | O | O | O | O | O | O | O | O | O | O | O | O | O |
| O | 13 | O | O | O | O | O | O | O | O | O | O | O | O | O | O |
| O | 13 | O | O | O | O | O | O | O | O | O | O | O | O | O | O |
| O | O | 13 | O | O | O | O | O | O | O | O | O | O | O | O | O |
| O | O | O | O | O | O | O | O | O | O | O | O | O | O | O | O |
| O | O | O | O | O | O | O | O | O | O | O | O | O | O | O | O |
| O | O | O | O | O | O | O | O | O | O | O | O | O | O | O | O |
| O | O | 13 | O | O | O | O | O | O | O | O | O | O | O | O | O |
| O | O | O | O | O | O | O | O | O | O | O | O | O | O | O | O |
| O | O | O | O | O | O | O | O | O | O | O | O | O | O | O | O |
| O | O | O | O | O | O | O | O | O | O | O | O | O | O | O | O |
| O | O | 13 | O | O | O | O | O | O | O | O | O | O | O | O | O |
| O | O | O | O | O | O | O | O | O | O | O | O | O | O | O | O |
| O | O | O | O | O | O | O | O | O | O | O | O | O | O | O | O |
| O | O | O | O | O | O | O | O | O | O | O | O | O | O | O | O |

## TABLE IV

### SITUATION AVANT LE DECODAGE VERTICAL

| | | | | | | | | | | | | | | | |
|---|---|---|---|---|---|---|---|---|---|---|---|---|---|---|---|
| 12 | 14 | 8 | 4 | 5 | 6 | 7 | 8 | 14 | 5 | 3 | 15 | 2 | 15 | 4 | 6 |
| 14 | 14 | 2 | 2 | 2 | 2 | 2 | 2 | 2 | 2 | 2 | 2 | 2 | 2 | 2 | O |
| 3 | 8 | 3 | 3 | 3 | 3 | 3 | 3 | 3 | 3 | 3 | 3 | 3 | 3 | 3 | O |
| 4 | 11 | 4 | 4 | 4 | 4 | 4 | 4 | 4 | 4 | 4 | 4 | 4 | 4 | 4 | O |
| 5 | 5 | 7 | 5 | 5 | 5 | 5 | 5 | 5 | 5 | 5 | 5 | 5 | 5 | 5 | O |
| 6 | 6 | 6 | 6 | 6 | 6 | 6 | 6 | 6 | 6 | 6 | 6 | 6 | 6 | 6 | O |
| 7 | 7 | 7 | 7 | 7 | 7 | 7 | 7 | 7 | 7 | 7 | 7 | 7 | 7 | 7 | O |
| 8 | 8 | 8 | 8 | 8 | 8 | 8 | 8 | 8 | 8 | 8 | 8 | 8 | 8 | 8 | O |
| 9 | 9 | 10 | 9 | 9 | 9 | 9 | 9 | 9 | 9 | 9 | 9 | 9 | 9 | 9 | O |
| 1 | 1 | 1 | 1 | 1 | 1 | 1 | 1 | 1 | 1 | 1 | 1 | 1 | 1 | 1 | O |
| 2 | 2 | 2 | 2 | 2 | 2 | 2 | 2 | 2 | 2 | 2 | 2 | 2 | 2 | 2 | O |
| 3 | 3 | 3 | 3 | 3 | 3 | 3 | 3 | 3 | 3 | 3 | 3 | 3 | 3 | 3 | O |
| 13 | 2 | 3 | 10 | 4 | 7 | 3 | 11 | 12 | 4 | 8 | O | 2 | O | 10 | 15 |
| 10 | O | 11 | 15 | 6 | 8 | 2 | 5 | 3 | 6 | 11 | 13 | O | 13 | 15 | 11 |
| 1 | 13 | O | 14 | 3 | 9 | 11 | 5 | 7 | 3 | O | 6 | 13 | 6 | 14 | 13 |
| 4 | 6 | 15 | 3 | 14 | 7 | 12 | 10 | 9 | 14 | 15 | 13 | 6 | 13 | 3 | 13 |

## TABLE V

### SITUATION AVANT LE DECODAGE HORIZONTAL

| 1 | 0 | 0 | 4 | 5 | 6 | 7 | 8 | 14 | 5 |
|---|---|---|---|---|---|---|---|---|---|
| 2 | 0 | 0 | 2 | 2 | 2 | 2 | 2 | 2 | 2 |
| 3 | 0 | 0 | 3 | 3 | 3 | 3 | 3 | 3 | 3 |
| 4 | 0 | 0 | 4 | 4 | 4 | 4 | 4 | 4 | 4 |
| 5 | 0 | 0 | 5 | 5 | 5 | 5 | 5 | 5 | 5 |
| 6 | 0 | 0 | 6 | 6 | 6 | 6 | 6 | 6 | 6 |
| 7 | 0 | 0 | 7 | 7 | 7 | 7 | 7 | 7 | 7 |
| 8 | 0 | 0 | 8 | 8 | 8 | 8 | 8 | 8 | 8 |
| 9 | 0 | 0 | 9 | 9 | 9 | 9 | 9 | 9 | 9 |
| 1 | 0 | 0 | 1 | 1 | 1 | 1 | 1 | 1 | 1 |
| 2 | 0 | 0 | 2 | 2 | 2 | 2 | 2 | 2 | 2 |
| 3 | 0 | 0 | 3 | 3 | 3 | 3 | 3 | 3 | 3 |
| 13 | 2 | 3 | 10 | 4 | 7 | 3 | 11 | 12 | 4 |
| 10 | 0 | 11 | 15 | 6 | 8 | 2 | 5 | 3 | 6 |
| 1 | 13 | 0 | 14 | 3 | 9 | 11 | 5 | 7 | 3 |
| 4 | 6 | 15 | 3 | 14 | 7 | 12 | 10 | 9 | 14 |

## TABLE VI

| 1 | 2 | 3 | 4 | 5 | 6 | 7 | 8 |
|---|---|---|---|---|---|---|---|
| 2 | 2 | 2 | 2 | 2 | 2 | 2 | 2 |
| 3 | 3 | 3 | 3 | 3 | 3 | 3 | 3 |
| 4 | 4 | 4 | 4 | 4 | 4 | 4 | 4 |
| 5 | 5 | 5 | 5 | 5 | 5 | 5 | 5 |
| 6 | 6 | 6 | 6 | 6 | 6 | 6 | 6 |
| 7 | 7 | 7 | 7 | 7 | 7 | 7 | 7 |
| 8 | 8 | 8 | 8 | 8 | 8 | 8 | 8 |
| 9 | 9 | 9 | 9 | 9 | 9 | 9 | 9 |
| 1 | 1 | 1 | 1 | 1 | 1 | 1 | 1 |
| 2 | 2 | 2 | 2 | 2 | 2 | 2 | 2 |
| 3 | 3 | 3 | 3 | 3 | 3 | 3 | 3 |

## FIG.1

## FIG.2

EP 0 194 920 B1

FIG.3

FIG.4